# EUROPEAN PATENT APPLICATION

(11) **EP 1 890 486 A2**
(43) Date of publication of application: **20.02.2008**
(21) Application number: 07108698.7
(22) Date of filing: 22.05.2007
(51) Int. Cl.: H04N 5/44

(54) **Electronic apparatus and method for performing initialization using data localization**

(30) Priority: 14.08.2006 KR 20060076605
(71) Applicant: Samsung Electronics Co., Ltd, Yeongtong-gu Suwon-city, Gyeonggi-do 442-742 (JP); SAMSUNG ELECTRONICS CO., LTD., Suwon-si Gyeonggi-do 442-742 (KR)
(72) Inventor: Kim, Ik-joon, Gwonseon-gu, Suwon-si, Gyeonggi-do (KR)
(74) Representative: Clark, David James

(57) **Abstract**

An electronic apparatus for performing an initialization using data localization includes a first memory (140) which stores first data necessary for an initialization, a first device (110) which performs an initialization using the first data, a second memory (150) which stores second data necessary for an initialization, a second device (120) which performs an initialization using the second data, and a controller (190) which controls the first and second devices (110, 120) to perform the parallel initializations.

## Description

Apparatuses and methods consistent the present invention relate to an electronic apparatus and a method for performing an initialization using data localization.

Image apparatuses are apparatuses which play or record broadcasts, images recorded on recording media, images transmitted from external apparatuses, etc. The image apparatuses display viewing information on images to be played or recorded so as to provide the viewing information to users.

If power is applied to such an image apparatus, semiconductor chips of the image apparatus sequentially perform initializations under control of a central processing unit (CPU). If the chips are completely initialized, the chips operate. The performances of the initializations depend on initialization data stored in an Electrically Erasable Programmable Read-Only Memory (EEPROM).

The EEPROM is a kind of nonvolatile memory from which stored data is not deleted when power is removed but can be electrically erased to record new data. Thus, such an EEPROM is mainly used in devices and apparatuses in which data or programs must be re-recorded.

The CPU controls a plurality of chips to be sequentially initialized so as to initialize the chips of the image apparatus. Thus, a long period of time is required for initializing the chips.

If a user desires to initialize the chips using pre-set initialization data of the chips and another type of data, the pre-set initialization data and the other type of data is stored in the EEPROM and then used to initialize corresponding chips under the control of the CPU. Thus, a longer period of time is required for initializing the plurality of chips.

Exemplary embodiments of the present invention aim to overcome the above disadvantages and other disadvantages not described above.

According to an aspect of the present invention, there is provided an electronic apparatus including: a first memory storing first data necessary for an initialization; a first device performing an initialization using the first data; a second memory storing second data necessary for an initialization; a second device performing an initialization using the second data; and a controller controlling the first and second devices to perform the parallel initializations.

The controller may determine whether user defined input data is data necessary for the initialization of one of the first and second devices.

If it is determined that the user defined input data is the data necessary for the initialization of the first device, the controller may store the user defined data in the first memory. If it is determined that the user defined input data is the data necessary for the initialization of the second device, the controller may store the user defined data in the second memory.

The data necessary for the initializations may be at least one of initialization data pre-set for an initialization of a device and user defined data.

The first device may directly access the first memory to read the first data so as to perform the initialization, and the second device may directly access the second memory to read the second data so as to perform the initialization.

The first device may be, but is not limited to, a tuner, a demodulator, an audio DAC (digital-to-analog converter), a deinterlacing unit, or a scaling unit, and the second device may be a tuner, a demodulator, an audio DAC, a deinterlacing unit, or a scaling unit.

According to another aspect of the present invention, there is provided a method of performing an initialization of an electronic apparatus, including: performing an initialization of a first device using first data stored in a first memory; and starting an initialization of a second device using second data stored in a second memory while the initialization of the first device is performed.

The method may further include determining whether user defined input data is data necessary for the initialization of one of the first and second devices.

If it is determined that the user defined input data is the data necessary for the initialization of the first device, the user defined data may be stored in the first memory. If it is determined that the user defined input data is the data necessary for the initialization of the second device, the user defined data may be stored in the second memory.

The data necessary for the initializations may be at least one of initialization data pre-set for an initialization of a device and user defined data.

The first device may directly access the first memory to read the first data so as to perform the initialization, and the second device may directly access the second memory to read the second data so as to perform the initialization.

The first device may be, but is not limited to, a tuner, a demodulator, an audio DAC, a deinterlacing unit, or a scaling unit, and the second device may be a tuner, a demodulator, an audio DAC, a deinterlacing unit, or a scaling unit.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a block diagram illustrating an electronic apparatus which performs an initialization using data localization according to an exemplary embodiment of the present invention; and
FIG. 2 is a flowchart illustrating a method of performing an initialization of an electronic apparatus using data localization according to an exemplary embodiment of the present invention.

Certain exemplary embodiments of the present invention will be described in greater detail with reference to the accompanying drawings.

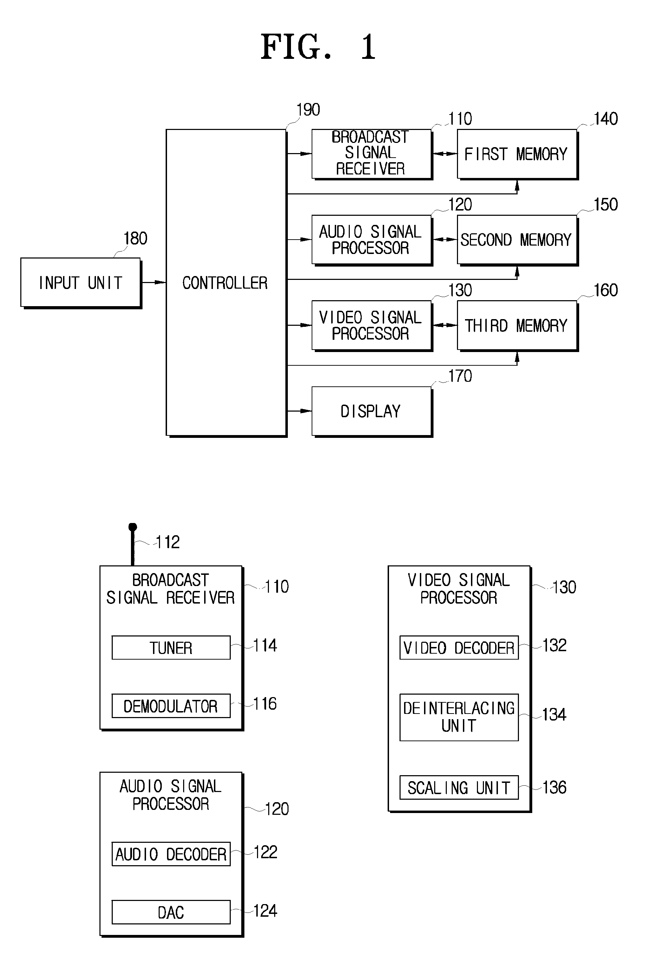

FIG. 1 is a block diagram illustrating an image apparatus which is an electronic apparatus which performs an initialization using data localization, according to an exemplary embodiment of the present invention. Referring to FIG. 1, the image apparatus includes a broadcast signal receiver 110, an audio signal processor 120, a video signal processor 130, a first memory 140, a second memory 150, a third memory 160, a display 170, an input unit 180, and a controller 190.

The broadcast signal receiver 110 includes an antenna 112, a tuner 114, and a demodulator 116.

The tuner 114 selects a broadcast channel of broadcast signals input through the antenna 112, wherein the broadcast channel is selected by a user through the input unit 180, and the demodulator 116 demodulates the broadcast signal output from the tuner.

The audio signal processor 120 includes an audio decoder 122 and an audio digital-to-analog converter (DAC) 124. The audio decoder 122 expands a compressed audio signal received from the broadcast signal receiver 110, and the audio DAC 124 converts the expanded audio signal into an analog audio signal and outputs the analog audio signal to a speaker.

The video signal processor 130 includes a video decoder 132, a deinterlacing unit 134, and a scaling unit 136. The video decoder 132 expands a compressed video signal received from the broadcast signal receiver 110, and the deinterlacing unit 134 deinterlaces an interlaced image signal output from the video decoder to generate a progressive image signal.

The scaling unit 136 converts an input image signal so that the input image signal has the same resolution as the electronic apparatus. In other words, the scaling unit 136 extends or reduces a size of an input image so that the size of the input image signal is appropriate to a size of a displayed screen. As described above, the image apparatus includes the broadcast signal receiver 110 outputting a broadcast signal, the audio signal processor 120, and the video signal processor 130. Also, the broadcast signal receiver 110, the audio signal processor 120, and the video signal processor 130 each include detailed elements such as the tuner 114, the demodulator 116, the audio decoder 122, the audio DAC 124, the video decoder 132, the deinterlacing unit 134, and the scaling unit 136. These detailed elements are referred to as constituent devices in relation to the present invention.

The first memory 140 stores data necessary for an initialization of the broadcast signal receiver 110. The data necessary for the initialization of the broadcast signal receiver 110 may be divided into original initialization data which is pre-set for the initialization of the broadcast signal receiver 110 and initialization data which is different from the pre-set initialization data and may be changed by a user.

The initialization data, which may be changed by the user, is called user defined data. The user defined data is stored in the first memory 140 under a control of the controller 190 which will be described later.

The second memory 150 stores initialization data pre-set for an initialization of the audio signal processor 120 and user defined data. The third memory 160 stores the initialization data pre-set for the initialization of the video signal processor 130 and user defined data.

The storage of initialization data in memories of devices performing initializations, unlike the storage of initialization data in an EEPROM, is called data localization.

The input unit 180 receives a manipulation command of the user and transmits the manipulation command to the controller 190. The input unit 180 is generally provided at a user accessible part of the image apparatus. The input unit 180 may also include a remote controller and a light receiving unit. The remote controller is used to input the manipulation command of the user. The light receiving unit receives a signal output from the remote controller and transmits the signal to the controller 190.

The controller 190 controls overall operation of the image apparatus. In particular, the controller 190 controls the broadcast signal receiver 110, the audio signal processor 120, and the video signal processor 130 to perform parallel initializations.

Throughout the description, the term 'parallel initializations' refers to the coincident initializations of the respective components for a predetermined time period.

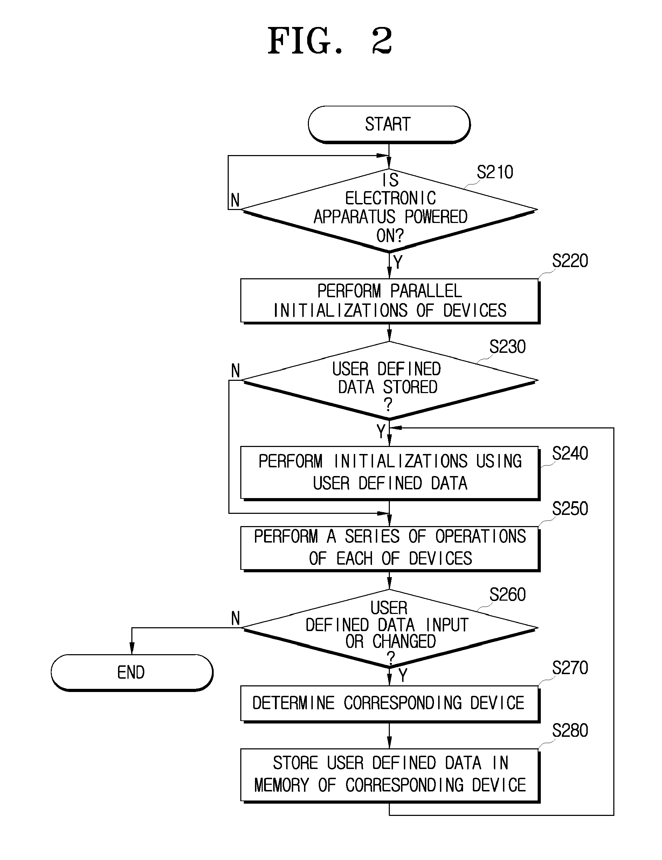

The controller 190 determines whether user defined data input by the user is data necessary for an initialization of one of the broadcast signal receiver 110, the audio signal processor 120 and the video signal processor 130, and stores the user defined data in a memory of the corresponding device. A method of performing the initialization of the image apparatus will now be described with reference to FIG. 2.

FIG. 2 is a flowchart illustrating a method of performing an initialization of an image apparatus according to an exemplary embodiment of the present invention. Referring to FIG. 2, in operation S210, the controller 190 determines whether the image apparatus is powered on. If a user inputs a power-on command using a power button of the input unit 180, the controller 190 determines that the image apparatus is powered on.

If the image apparatus is powered on in operation S210-Y, the controller 190 controls devices to perform parallel initializations. Thus, the devices perform the parallel initializations in operation S220. The devices read initialization data from memories of the devices storing the initialization data to perform the initializations.

The devices directly access the memories respectively corresponding to the devices to read the initialization data so as to perform the initializations. The initialization data is standardized as data tables stored in the memories, and is pre-set initialization data which is different from user defined data.

In operation S230, the devices which have performed the initializations using the pre-set initialization data read the initialization data stored in the memories to determine whether user defined data is stored in the memories, wherein the user defined data is necessary for additionally performing an initialization by the user.

If it is determined in operation S230-N that the user defined data is not stored in the memories, the initializations of the corresponding devices are completed. If it is determined in operation S230-Y that the user defined data is stored in the memories, then in operation S240 the devices which are to perform initializations based on the user defined data directly access memories corresponding to the devices to read the user defined data so as to perform the initializations.

As described above, the devices include the memories which store data necessary for the initializations. In other words, the data is localized. Thus, the device may perform the initializations using the pre-set initialization data and the user defined data stored in the memories so as to reduce a time required for performing the initializations.

If the initializations are completed, the devices perform their own operations. In other words, each of the devices may perform a series of operations so that a received image is output through the display 170 in operation S250.

In operation S260, the controller 190 determines whether the user defined data has been input or changed through the input unit 180 during the display of the received image. The user may input or change the user defined data different from the pre-stored initialization data on the devices through the input unit 180, and the controller 190 determines whether the user has input or changed the user defined data through the input unit 180.

If it is determined in operation S260 that the user defined datahas been input or changed, the controller 190 determines a device to which the input user defined data is to be applied in operation S270. For example, if the input or changed user defined data is data related to the video signal processor 130, the controller 190 determines that the user defined data is data used to initialize a device as the video signal processor 130.

In operation S280, the controller 190 stores the user defined data in a memory which stores the data necessary for the initialization of the device to which the user defined data is to be applied, in this case, in the third memory 160 shown in FIG. 1. In other words, user defined data related to the video signal processor 130 is stored in the third memory 160 which stores data necessary for an initialization of the video signal processor 130.

The video signal processor 130 reads the stored user defined data related to the video signal processor 130 from the third memory 160 to perform the initialization.

It has been described with reference to FIG. 1 that the first, second, and third memories 140, 150, and 160 are included to initialize the broadcast signal receiver 110, the audio signal processor 120, and the video signal processor 130, respectively. However, this description is for convenience. Devices constituting the image apparatus besides the broadcast signal receiver 110, the audio signal processor 120, and the video signal processor 130 or devices constituting the broadcast signal receiver 110, the audio signal processor 120, and the video signal processor 130 may include memories which store data necessary for performing initializations, wherein the devices constituting the broadcast signal receiver 110, the audio signal processor 120, and the video signal processor 130 perform initializations. For example, the tuner 114, the demodulator 116, the audio DAC 124, the deinterlacing unit 134, and the scaling unit 136 may perform initializations and thus require memories which store data necessary for the initializations.

The block diagram of the image apparatus and the method of performing the initialization of the image apparatus have been described with reference to FIGS. 1 and 2. However, the present invention is not limited to these exemplary embodiments and thus may be applied to image apparatuses and other electronic apparatuses performing initializations.

As described above, in an electronic apparatus and a method for performing an initialization using data localization according to the exemplary embodiments of the present invention, the electronic apparatus can include a plurality of devices. The plurality of devices include respective memories which store data necessary for initializations. Thus, the devices perform the parallel initializations using the data stored in the memories. As a result, a time required for performing the initializations is reduced.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An electronic apparatus comprising:
a first memory (140) which stores first data necessary for a first initialization;
a first device (110) which performs the first initialization using the first data;
a second memory (150) which stores second data necessary for a second initialization;
a second device (120) which performs the second initialization using the second data; and
a controller (190) which controls the first and second devices (110, 120) such that the second device (120) begins in the second initialization while the first device (110) is performing the first initialization.

2. The electronic apparatus of claim 1, wherein if an initialization execution command is received from the controller (190), the first and second devices (110, 120) directly initialize their constituent devices.

3. The electronic apparatus of claim 1 or 2, wherein the controller (190) determines whether user defined data is data necessary for the first or second initialization of the first or second devices (110, 120), respectively.

4. The electronic apparatus of claim 3, wherein if it is determined that the user defined input data is the data necessary for the first initialization of the first device (110), the controller (190) stores the user defined data in the first memory (140), and if it is determined that the user defined input data is the data necessary for the second initialization of the second device (120), the controller stores the user defined data in the second memory (150).

5. The electronic apparatus of any preceding claim, wherein data necessary for the first or second initializations are at least one of initialization data pre-set for initialization of a device and user defined data.

6. The electronic apparatus of any preceding claim, wherein the first device (110) directly accesses the first memory (140) to read the first data to perform the first initialization of the first device (110), and the second device (120) directly accesses the second memory (150) to read the second data to perform the second initialization of the second device (120).

7. The electronic apparatus of any preceding claim, wherein the first device (110) is one of a tuner, a demodulator, an audio DAC (digital-to-analog converter), a deinterlacing unit, and a scaling unit, and the second device (120) is one of a tuner, a demodulator, an audio DAC, a deinterlacing unit, and a scaling unit.

8. The electronic apparatus of any preceding claim, wherein the electronic apparatus is an image apparatus.

9. A method of performing initializations of an electronic apparatus, comprising:
performing a first initialization of a first device (110) using first data stored in a first memory (140); and
starting a second initialization of a second device (120) using second data stored in a second memory (150) while the first initialization of the first device (110) is performed.

10. The method of claim 9, further comprising commanding the performance of the first initialization of the first device (110) and the second initialization of the second device (120).

11. The method of claim 9 or 10, further comprising determining whether user defined input data is data necessary for the first or second initialization of the first or second devices (110, 120), respectively.

12. The method of claim 11, wherein if it is determined that the user defined input data is data necessary for the initialization of the first device (110), the user defined data is stored in the first memory (140), and if it is determined that the user defined input data is data necessary for the second initialization of the second device (120), the user defined data is stored in the second memory (150).

13. The method of claim 9, 10, 11 or 12, wherein the data necessary for the first and second initializations are at least one of initialization data pre-set for an initialization of a device and user defined data.

14. The method of any one of claims 9-13, wherein the first device (110) directly accesses the first memory to read the first data to perform the first initialization of the first device (110), and the second device (120) directly accesses the second memory to read the second data to perform the second initialization of the second device (120).

15. The method of any one of claims 9-14, wherein the first device (110) is one of a tuner, a demodulator, an audio DAC, a deinterlacing unit, and a scaling unit, and the second device (120) is one of a tuner, a demodulator, an audio DAC, a deinterlacing unit, and a scaling unit.

16. The method of any one of claims 9-15, wherein the electronic apparatus is an image apparatus.
